Europäisches Patentamt

European Patent Office

Office européen des brevets

(11) Numéro de publication : **0 484 258 A1**

# (12) DEMANDE DE BREVET EUROPEEN

(21) Numéro de dépôt : **91420387.2**

(51) Int. Cl.$^5$ : **E05F 15/12**

(22) Date de dépôt : **29.10.91**

(30) Priorité : **29.10.90 FR 9013636**

(43) Date de publication de la demande :
**06.05.92 Bulletin 92/19**

(84) Etats contractants désignés :
**AT BE CH DE ES FR GB GR IT LI LU NL**

(71) Demandeur : **Société Anonyme: AD HOME**
**Place de la Mairie**
**F-07340 Peaugres (FR)**

(72) Inventeur : **Viviant, Jean-Marc**
**Choye**
**F-70700 Gy (FR)**
Inventeur : **Jardinier, Serge**
**24 Hameaux des Hauches**
**F-26270 Loriol (FR)**

(74) Mandataire : **Ropital-Bonvarlet, Claude**
**Cabinet Beau de Loménie B.P. 7073**
**F-69341 Lyon Cedex 07 (FR)**

(54) **Dispositif de commande d'ouverture et de fermeture d'un vantail pivotant sur 180 degrés et installation incluant un teldispositif.**

(57)   - Le dispositif selon l'invention, de commande d'ouverture et de fermeture d'un vantail (2) pivotant sur une plage angulaire de 180°, autour d'un axe d'articulation (O), du type comportant un moto-réducteur (4) apte à entraîner en rotation autour d'un axe (C) une première bielle (5) articulée avec une seconde bielle (6) reliée à un pivot fixe d'axe (A), est caractérisé en ce que le moto-réducteur (4) est calé en rotation avec la première bielle (5) et se trouve monté, par rapport à l'ouverture (1), sur la face interne du vantail (2) et en ce que le pivot fixe (7) est adapté sur l'encadrement ($1_1$) de l'ouverture (1), de manière qu'en position de fermeture du vantail, les axes (A et C) occupent des positions voisines et se trouvent sur une ligne commune sensiblement perpendiculaire au plan du vantail, pour assurer un verrouillage du vantail (2).

FIG.2D

La présente invention concerne les dispositifs, au sens général, conçus pour assurer l'ouverture et la fermeture d'au moins un vantail ou panneau pivotant sur une plage angulaire de 180° et constituant, par exemple, un élément d'occultation partielle ou complète d'une ouverture, telle qu'une fenêtre ou une porte.

L'invention est particulièrement adaptée pour équiper les volets pivotants, de formes et de natures diverses, présentant un vantail ou deux vantaux.

L'art antérieur a proposé, par le Certificat d'Utilité **FR-2 490 712**, un dispositif de commande d'ouverture et de fermeture d'un vantail pivotant comportant un moto-réducteur apte à entraîner en rotation une première bielle autour d'un axe vertical. Cette première bielle est articulée avec une extrémité d'une seconde bielle, dont l'autre extrémité est reliée à un pivot fixe monté sur le vantail. Le moto-réducteur est relié à la première bielle par l'intermédiaire d'une tringlerie qui est apte à renvoyer le mouvement de rotation à un dispositif similaire équipant un second vantail.

Un tel dispositif est destiné à être installé entre les montants verticaux d'une fenêtre, en relation de proximité des traverses haute et basse de la fenêtre. Un tel dispositif présente, en pratique, de nombreux inconvénients.

En effet, il apparaît clairement qu'un tel dispositif ne se trouve pas adapté pour équiper les volets d'une fermeture dont l'encadrement n'a pas été conçu pour recevoir un tel dispositif. Il s'ensuit qu'un tel dispositif nuit de façon indéniable à l'esthétique de la fenêtre ainsi équipée et occulte la fenêtre d'une manière non acceptable.

Un autre inconvénient de ce dispositif a trait à la commande simultanée des deux vantaux réalisés par l'intermédiaire d'une tringlerie commune, de sorte qu'il n'apparaît pas possible de dissocier l'ouverture ou la fermeture, complète ou partielle, des deux vantaux.

La présente invention vise à remédier aux inconvénients énoncés ci-dessus en proposant un dispositif de commande d'ouverture et de fermeture d'un vantail pivotant sur une plage angulaire de 180° et susceptible d'être installé sur le vantail d'une ouverture qui n'a pas été conçue pour recevoir ce dispositif sans, toutefois, nuire à l'esthétique de l'ouverture et au passage de la lumière.

L'objet de l'invention vise également à proposer un dispositif apte à assurer un verrouillage efficace du vantail, aussi bien en position de fermeture, d'ouverture ou intermédiaire entre ces deux positions extrêmes.

Un objet supplémentaire de l'invention vise à offrir un dispositif destiné à équiper un vantail pivotant de toute nature et présentant une facilité de montage.

L'invention vise également à proposer un dispositif adapté pour assurer une commande indépendante des deux vantaux équipant une ouverture.

Pour atteindre les objectifs ci-dessus, le dispositif selon l'invention, pour commander en ouverture et en fermeture un vantail pivotant sur une plage angulaire de 180° autour d'un axe d'articulation, est du type comportant un moto-réducteur apte à entraîner en rotation autour d'un axe, une première bielle articulée selon un axe correspondant avec une extrémité d'une seconde bielle dont l'autre extrémité est reliée à un pivot fixe, les axes de rotation étant sensiblement parallèles entre eux. Le dispositif selon l'invention est caractérisé en ce que le moto-réducteur est calé en rotation avec la première bielle et se trouve monté, par rapport à l'ouverture, sur la face interne du vantail et en ce que le pivot fixe est adapté sur l'encadrement de l'ouverture, de manière qu'en position de fermeture du vantail les axes occupent des positions voisines et se trouvent sur une ligne commune sensiblement perpendiculaire au plan du vantail, pour assurer un verrouillage du vantail.

L'objet de l'invention vise également à proposer une installation pour deux vantaux d'une ouverture comportant un circuit de contrôle commun aux deux moto-réducteurs de commande des vantaux et auquel est associé un moyen de temporisation permettant de décaler la rotation du vantail droit par rapport à celle du vantail gauche, lors de la fermeture des vantaux, et inversement, lors de l'ouverture des vantaux.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en perspective montrant une fenêtre à deux vantaux sur lesquels est adapté le dispositif de commande conforme à l'invention.

Les **fig. 2A à 2E** sont des vues de dessus montrant le dispositif dans différentes positions caractéristiques.

La **fig. 3** est une vue en coupe du moto-réducteur mis en oeuvre dans le dispositif de commande selon l'invention.

La **fig. 4** est une vue en élévation prise sensiblement selon les lignes **IV-IV** de la **fig. 3**.

La **fig. 5** représente des courbes montrant le couple moteur exercé sur le vantail en fonction de son angle d'ouverture.

La **fig. 6** est une vue en coupe prise sensiblement selon les lignes **VI-VI** de la **fig. 2B**.

La **fig. 7** est un diagramme fonctionnel montrant un détail caractéristique du dispositif de commande selon l'invention.

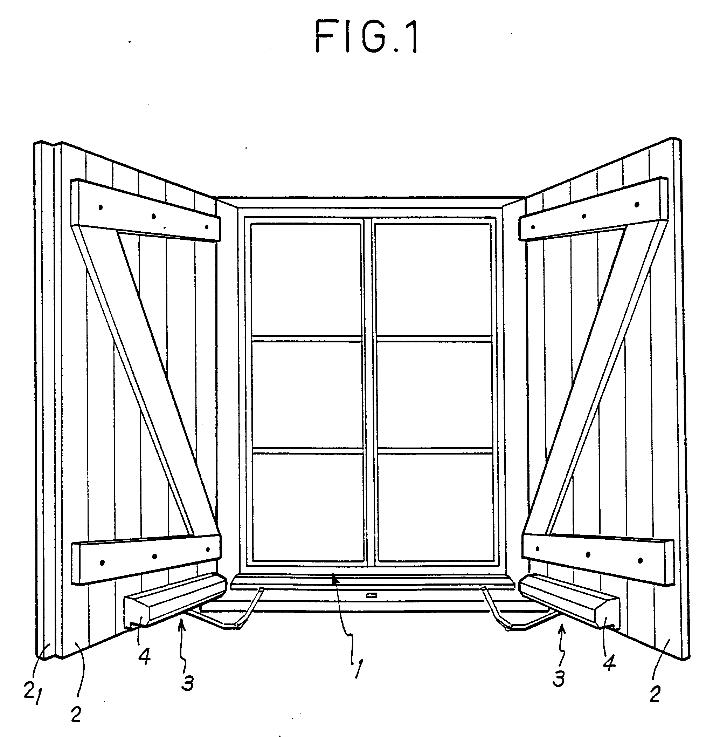

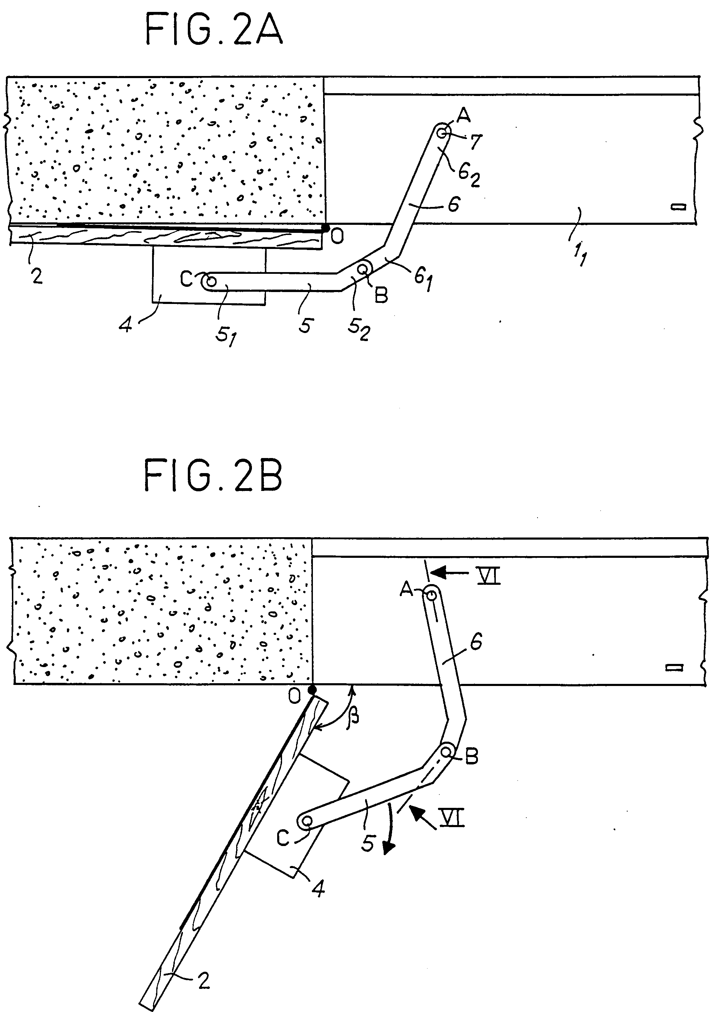

La **fig. 1** illustre une ouverture **1**, telle qu'une fenêtre équipée de deux panneaux, volets ou, d'une manière générale, de vantaux **2** pourvus chacun d'un dispositif **3** conforme à l'invention, assurant leur commande en ouverture et en fermeture. Selon l'invention, chaque dispositif **3** comporte un moto-réducteur **4** destiné à être adapté, par tout moyen convenable, au vantail **2** sur sa face interne par rapport à l'ouverture **1** et, par exemple, dans sa partie basse. Tel que cela apparaît plus précisément à la **fig. 2A**, le moto-réducteur 4 est destiné à entraîner en rotation une première bielle **5** calée angulairement par une extrémité $5_1$ avec l'arbre de sortie du moto-réducteur, tournant autour d'un axe vertical $\underline{C}$ qui est sensiblement parallèle à l'axe d'articulation $\underline{O}$ du vantail **2**. La première bielle **5** est articulée, par son extrémité opposée $5_2$, à une extrémité $6_1$ d'une seconde bielle **6**, autour d'un axe d'articulation $\underline{B}$. L'extrémité opposée $6_2$ de la bielle **6** est reliée à un pivot fixe **7** présentant un axe général $\underline{A}$. Le pivot **7** est fixé sur l'encadrement $1_1$ bordant extérieurement l'ouverture **1**. Dans l'exemple illustré, le pivot **7** est fixé sur la partie de l'encadrement formant le rebord de la fenêtre. Les axes $\underline{A}$, $\underline{B}$, $\underline{C}$ et $\underline{O}$ sont sensiblement parallèles entre eux, de sorte que tes bielles **5** et **6** évoluent dans un plan sensiblement perpendiculaire au plan du vantail **2**.

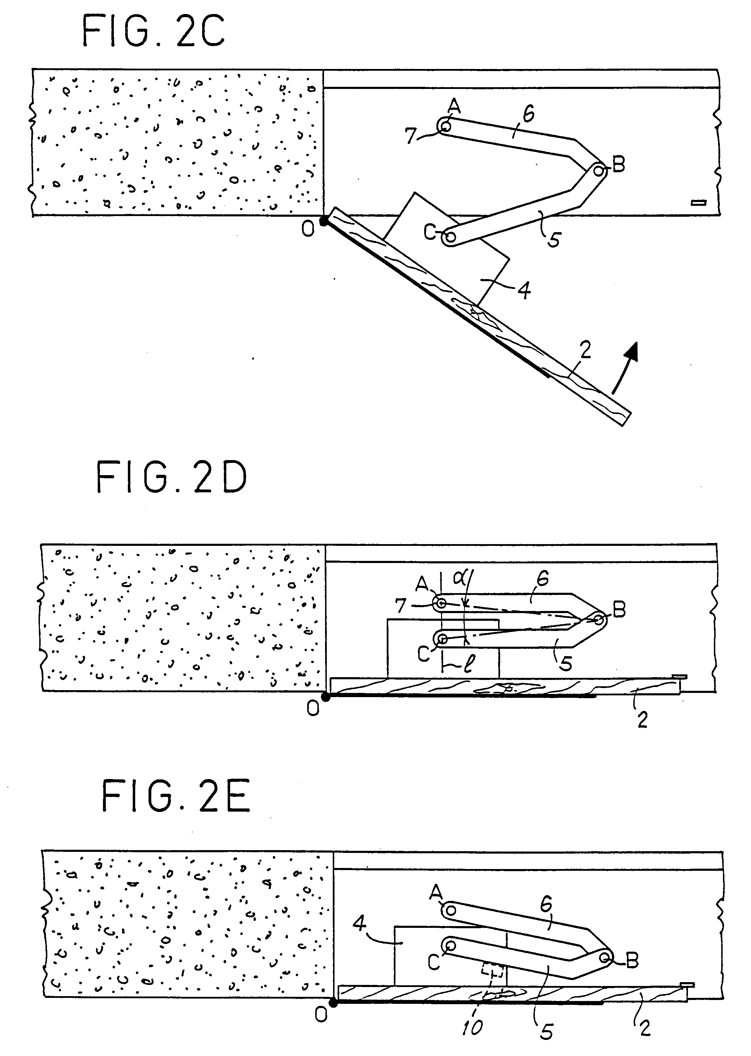

Conformément à l'invention, la somme des longueurs des bielles **5** et **6**, prise respectivement entre les axes $\underline{CB}$ et $\underline{BA}$, est supérieure à la somme des mesures $\underline{CO}$ et $\underline{OA}$, de manière à autoriser un pivotement du vantail **2** sur une plage angulaire de 180° à partir d'une position d'ouverture représentée à la **fig. 2A** jusqu'à une position de fermeture illustrée à la **fig. 2D**, en passant par des positions intermédiaires représentées aux **fig. 2B** et **2C**. Selon l'invention, le pivot fixe **7** est adapté sur l'encadrement, de manière, qu'en position de fermeture du vantail, les axes $\underline{A}$ et $\underline{C}$ occupent des positions voisines et se trouvent situés sur une ligne commune $\underline{I}$ s'étendant sensiblement perpendiculairement au plan du vantail **2**. Dans la mesure où les points $\underline{A}$ et $\underline{C}$ sont proches l'un de l'autre en position de fermeture, l'angle $\alpha$, pris entre les lignes $\underline{AB}$ et $\underline{BC}$, présente une valeur inférieure à 30° et, avantageusement, de l'ordre d'une dizaine de degrés et, de préférence, la plus proche de zéro. Une action sur le vantail **2**, pour tenter de l'ouvrir, provoque un effort sur la bielle **6**. Le moto-réducteur étant irréversible, il peut être considéré que la bielle **5** est solidaire du vantail, de sorte que la bielle **6** peut alors être assimilée à un crochet de fermeture assurant le verrouillage du vantail **2**.

Avantageusement, les bielles **5** et **6** présentent des longueurs $\underline{AB}$ et $\underline{CB}$ identiques et s'étendent donc selon des directions sensiblement parallèles au plan du vantail, lorsque ce dernier occupe la position de fermeture (**fig. 2D**). Le pivot **7** est positionné de manière à s'étendre le plus proche possible de l'axe $\underline{C}$, c'est-à-dire à tendre à être confondu avec l'axe $\underline{C}$ pour obtenir un verrouillage maximum. De préférence, le rapport des mesures $\underline{AC/CB}$ est inférieur à 1/4 en position de fermeture.

Avantageusement, le moto-réducteur est commandé au-delà de la position illustrée à la **fig. 2D** pour laquelle la bielle **5** a subi une rotation de 180° à partir de la position d'ouverture. Le moto-réducteur est commandé sur une plage angulaire consécutive limitée à quelques degrés, de manière à ce que la bielle **6** se trouve en tension mécanique sous l'action de la première bielle **5**. Cette disposition permet de rattraper tous les jeux inhérents aux différents organes rentrant dans la chaîne cinématique du dispositif. Cette position, représentée à la **fig. 2E** dans laquelle la bielle **5** s'est rapprochée du vantail, constitue donc une position de verrouillage du vantail offrant un maximum d'inviolabilité. Cette position est, de préférence, détectée par un capteur de position **10** fixé sur le moto-réducteur et apte à délivrer un signal exploitable par une installation antivol lorsque ce dernier détecte l'absence de la bielle **5**, dans le cas où le vantail **2** est fortement forcé à l'ouverture.

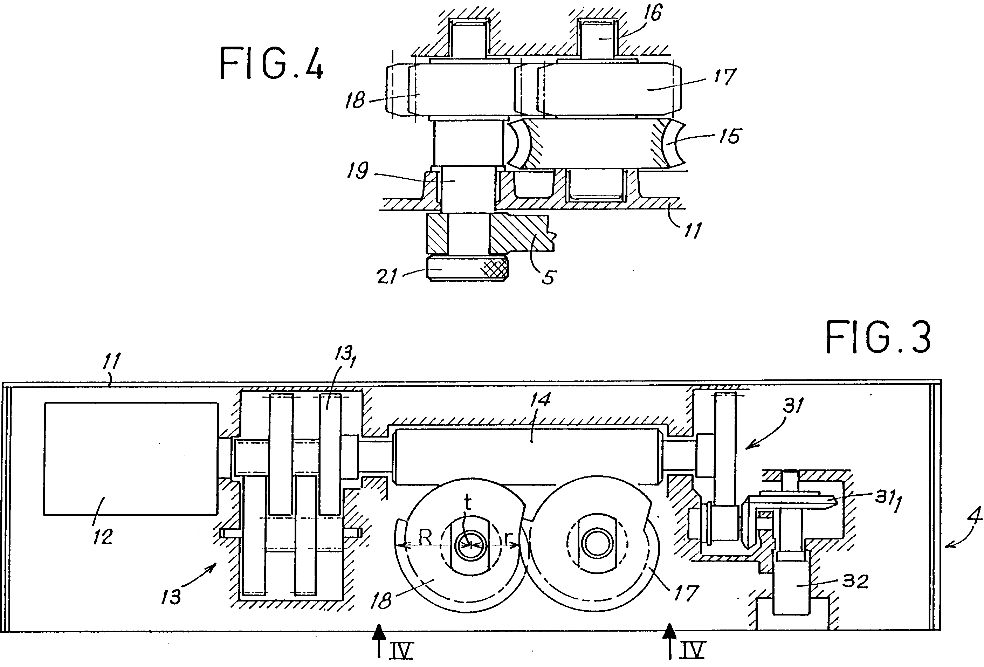

Tel que cela apparaît plus précisément aux **fig. 3** et **4**, le moto-réducteur 4 est intégré à l'intérieur d'un boîtier **11** fixé sur la partie interne du vantail. Le moto-réducteur **4** comporte un organe moteur **12**, tel qu'un moteur électrique à courant continu, accouplé en rotation avec un étage réducteur **13** dont le pignon de sortie $13_1$ est calé angulairement avec une vis sans fin **14**. Cette vis **14** est destinée à s'engrener, de façon irréversible, avec une roue dentée **15** montée sur un arbre **16** recevant un premier pignon d'engrènement **17** coopérant avec un second pignon **18**.

Avantageusement, chaque pignon **17**, **18** présente un rayon primitif correspondant à une spirale logarithmique, tel que cela apparaît plus précisément à la **fig. 3**. Le rapport de transmission de ce couple de pignons varie de :

$$\frac{R}{r} \text{ à } \frac{r}{R}$$

permettant d'obtenir un rapport :

$$\left(\frac{R}{r}\right)^2$$

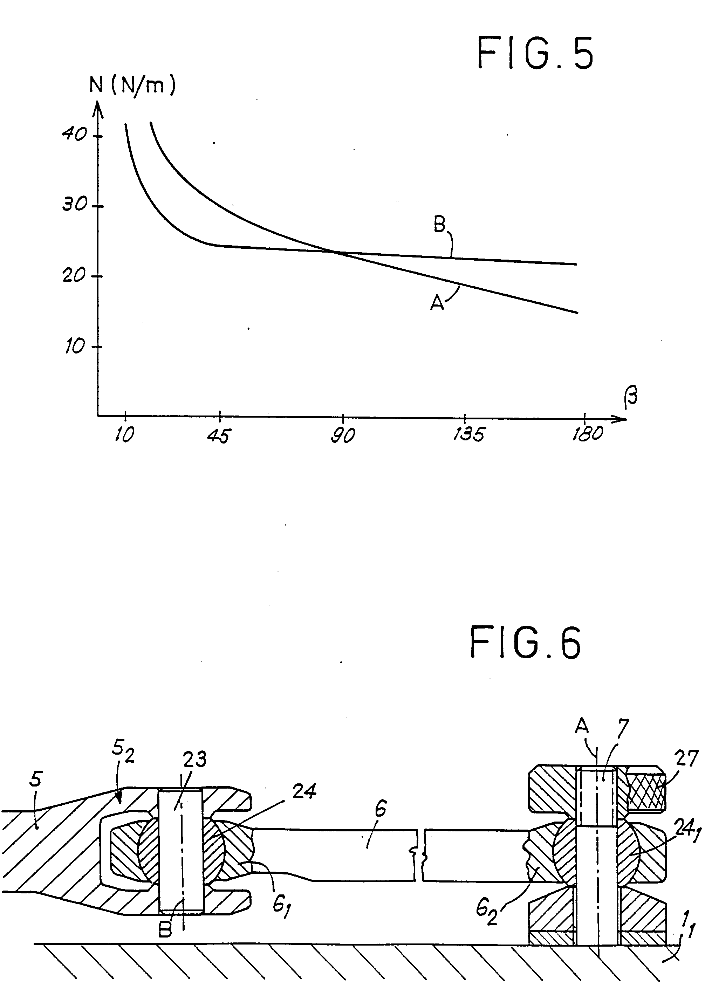

avec $\underline{r}$ étant la distance entre le centre de rotation $\underline{t}$ et le point d'engrènement et $\underline{R}$ la mesure diamétrale complémentaire prise entre le centre de rotation et le point placé sur le rayon primitif. La mise en oeuvre de ces pignons permet d'augmenter le couple moteur, tout en réduisant la vitesse de rotation et inversement, compensant ainsi la non constance du couple ramené à l'axe $\underline{O}$ du vantail. Tel que cela apparaît plus précisément sur la **fig. 5**, la courbe $\underline{A}$ permet de constater, en l'absence des pignons **17, 18**, que le couple $\underline{N}$ (en N/m), ramené à l'axe de rotation $\underline{O}$ du vantail, décroît fortement lorsque l'angle d'ouverture $\beta$ du vantail dépasse 90°. Toutefois, la mise en oeuvre du couple de pignons **17, 18** permet d'obtenir, au-delà d'un angle d'ouverture égal à 90°, des couples plus importants, correspondant à la courbe $\underline{B}$.

Une telle disposition permet donc d'assurer une ouverture convenable et automatique du vantail, même lorsque le vantail est soumis à des coups de vent violents. De plus, il est à noter que le couple moteur est encore élevé en position d'ouverture complète du vantail, de sorte que ce dernier est verrouillé de manière sûre, sans nécessiter la mise en oeuvre de taquets de blocage. Dans cette position d'ouverture, la bielle **5** se trouve sensiblement parallèle au plan du vantail 2 (**fig. 2A**).

Tel que cela apparaît plus précisément à la **fig. 4**, le pignon **18** est porté par un arbre **19** dépassant du boîtier **11** et sur lequel est bloqué en rotation la première bielle **5**. Il est à noter que cette bielle est montée sur l'axe **19** par l'intermédiaire d'un organe de serrage amovible **21**. Selon la **fig. 6**, l'extrémité $5_2$ de la bielle **5** est conformée pour présenter une chape dont les bras sont traversés par un tourillon **23**, d'axe général **B**. Le tourillon **23** traverse une rotule **24**, interposée entre les deux bras de la chape et adaptée sur l'extrémité $6_1$ de la seconde bielle **6**. L'extrémité $6_2$ de cette bielle comporte, également, une rotule $24_1$ montée sur le pivot **7** d'axe général **A** et ancré solidement sur le rebord $1_1$ de l'ouverture, par tous moyens appropriés. La bielle **5** est calée en déplacement axial sur le pivot **7**, par l'intermédiaire d'un organe de serrage amovible **27**.

La présence des rotules **24** et $24_1$ permet de compenser les erreurs de planéité entre les deux bielles, susceptibles d'intervenir lors du montage du dispositif, mais également en raison de l'inclinaison généralement présentée par les rebords des ouvertures. De plus, si la bielle **6** doit être démontée, son retrait peut être effectué facilement après l'enlèvement de l'organe **27**, en raison de la présence des rotules.

Dans le même sens, pour des raisons de sécurité, il peut être prévu d'autoriser une commande manuelle accessible de l'intérieur de l'ouverture lorsque les vantaux se trouvent fermés. A cet effet, la vis **14** est équipée d'un système **31** de roues et de pignons dentés, dont le pignon de sortie $31_1$ est monté sur un arbre **32** accessible de l'extérieur du boîtier **11**. Cet arbre **32** est apte à être déplacé axialement pour venir s'engrener avec les roues et pignons du système **31**. L'arbre **32** peut donc alors être commandé en rotation, par l'intermédiaire d'une manivelle permettant de commander l'ouverture des vantaux.

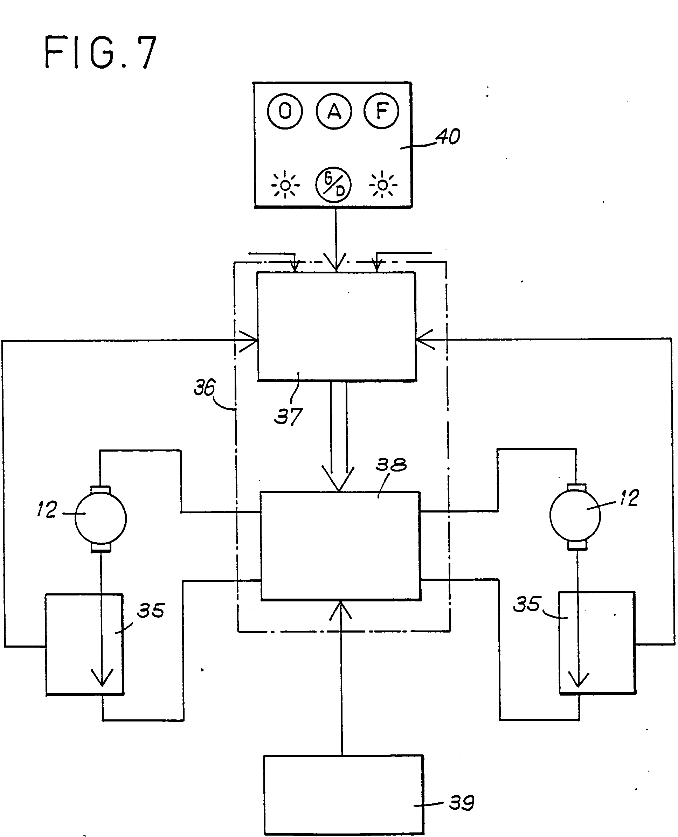

Chaque organe moteur **12** est associé à un détecteur **35** permettant de mesurer l'intensité du courant continu alimentant cet organe moteur (**fig. 7**). Ce détecteur est relié à un circuit de contrôle **36** comportant une unité de commande et de gestion **37** reliée à un circuit de commutation de puissance **38** alimenté par une source de tension **39**. Si l'intensité de courant mesurée par le détecteur **35** dépasse une valeur de consigne, l'unité **37** pilote l'arrêt de l'organe moteur associé. Une telle disposition offre une sécurité de fonctionnement, dans la mesure où, si un obstacle s'oppose à la fermeture du vantail, le fonctionnement de l'organe moteur est arrêté. Il est à noter que le dépassement de cette valeur de consigne est également utilisé pour arrêter le moteur lorsque le vantail arrive en position d'ouverture ou de fermeture.

L'unité de gestion **37** est commandée par un interrupteur de commande **40** placé à l'intérieur du volume fermé par l'ouverture **2**. Dans le cas où une ouverture est équipée de deux vantaux, le circuit de contrôle **36** peut être commun à deux dispositifs de commande conformes à l'invention. Dans ce cas, l'unité de gestion **37** comporte des moyens de temporisation permettant de décaler le mouvement du vantail droit par rapport à celui du vantail gauche, lors de la fermeture des vantaux, de manière que le vantail gauche coopère avec la feuillure $2_1$ portée généralement par le vantail droit. Bien entendu, une commande inverse est effectuée lors de l'ouverture de ces mêmes vantaux. L'unité **37** reçoit des ordres de commande de l'interrupteur **40** permettant, à partir d'ordres spécifiques, de piloter indépendamment les moto-réducteurs, de manière à permettre une occultation partielle ou complète indépendante entre les deux vantaux.

Le dispositif selon l'invention offre donc l'avantage de pouvoir être adapté facilement sur un vantail de toute nature et de toute forme, ne nécessitant aucun aménagement particulier au niveau de celui-ci ou au niveau de l'encadrement de l'ouverture devant être équipée d'un tel dispositif. De plus, un tel dispositif permet d'obtenir un verrouillage efficace en position de fermeture du vantail et autorise une ouverture complète du vantail, même en cas de fort coup de vent. Par ailleurs, lorsqu'une ouverture est équipée de deux vantaux, il peut être prévu de mettre en oeuvre une installation dans laquelle chaque vantail est équipé d'un moto-réducteur associé à un circuit de contrôle commun adapté pour assurer la commande indépendante des deux vantaux. Il convient, également, de noter que les vantaux peuvent être placés indépendamment l'un de l'autre dans des positions intermédiaires autorisant une multitude de possibilités d'occultation de l'ouverture **1**. A cet égard, il peut être prévu de monter un capteur de rotation monté sur la vis **14** et relié au circuit de contrôle **36** qui permet de définir la position du vantail à partir des informations délivrées par le capteur.

## Revendications

**1** - Dispositif de commande d'ouverture et de fermeture d'au moins un vantail (**2**) d'occultation d'une ouverture (**1**), destiné à pivoter sur une plage angulaire de l'ordre de 180° autour d'un axe d'articulation (**O**), le dispositif comportant un moto-réducteur (**4**) apte à entraîner en rotation autour d'un axe (**C**) une première bielle (**5**) articulée selon un axe (**B**) avec une extrémité d'une seconde bielle (**6**) dont l'autre extrémité est reliée à un pivot fixe (**7**) d'axe (**A**), les axes (**A, B, C, O**) étant sensiblement parallèles entre eux, caractérisé en ce que le moto-réducteur (**4**) est calé en rotation avec la première bielle (**5**) et se trouve monté, par rapport à l'ouverture (**1**), sur la face interne du vantail (**2**) et en ce que le pivot fixe (**7**) est adapté sur l'encadrement (**1₁**) de l'ouverture (**1**), de manière qu'en position de fermeture du vantail, les axes (A et C) occupent des positions voisines et se trouvent sur une ligne commune sensiblement perpendiculaire au plan du vantail, pour assurer un verrouillage du vantail (**2**).

2 - Dispositif selon la revendication 1, caractérisé en ce que le moto-réducteur (**4**) est commandé pour assurer la rotation de la première bielle (**5**) sur une plage angulaire au moins égale à 180°, de manière à assurer le passage d'une position d'ouverture à celle de fermeture du vantail sur au moins 180° et inversement, dans chacune desquelles la première bielle (**5**) occupe une position sensiblement parallèle au vantail.

3 - Dispositif selon la revendication 2, caractérisé en ce que le moto-réducteur (**4**) est commandé pour assurer la rotation de la première bielle (**5**) sur un secteur angulaire limité consécutif à la plage de rotation de 180° permettant de passer de la position d'ouverture à celle de fermeture, en vue de tendre mécaniquement la bielle (**6**).

4 - Dispositif selon la revendication 3, caractérisé en ce que la première bielle (**5**), en position de verrouillage, vient en contact avec un détecteur de position (**10**).

5 - Dispositif selon la revendication 2 ou 3, caractérisé en ce que la première bielle (**5**) et la seconde bielle (**6**) présentent des longueurs, prises entre leurs axes respectifs, sensiblement identiques.

6 - Dispositif selon la revendication 1, caractérisé ence que la seconde bielle (**6**) est assemblée, de façon démontable, sur le pivot (**7**) à l'aide d'une rotule (**24₁**) et se trouve articulé à la première bielle (**5**) par l'intermédiaire d'une autre rotule (**24**).

7 - Dispositif selon la revendication 1, caractérisé en ce que le moto-réducteur (**4**) comporte un organe moteur (**12**) associé à un étage réducteur (**13**) qui est relié à la première bielle (**5**) par l'intermédiaire d'un couple de pignons (**17, 18**) d'engrènement présentant chacun un rayon primitif correspondant à une spirale logarithmique, de manière à augmenter le couple moteur dans la phase terminale d'ouverture du vantail.

8 - Dispositif selon la revendication 7, caractérisé en ce que l'organe moteur (**12**) est relié à l'un des pignons, par l'intermédiaire d'un système irréversible (**14**), et se trouve associé à un détecteur (**35**) de l'intensité du courant continu l'alimentant, connecté à un circuit de contrôle (**36**) assurant l'arrêt de l'organe moteur lorsque l'intensité du courant dépasse une valeur de consigne.

9 - Dispositif selon la revendication 8, caractérisé en ce que le système irréversible (**14**) est équipé d'un capteur de rotation relié au circuit de contrôle permettant de déterminer la position du vantail à partir des informations délivrées par le capteur.

10 - Installation pour un volet à deux vantaux, caractérisée en ce qu'elle comporte, pour chaque vantail, un dispositif conforme à l'une des revendications 1 à 9.

11 - Installation selon la revendication 10, caractérisée en ce qu'elle comporte un circuit de contrôle commun aux deux moto-réducteurs de commande des vantaux et auquel sont associés des moyens de temporisation permettant de décaler le vantail droit par rapport au vantail gauche, lors de la fermeture des vantaux, et inversement, lors de l'ouverture des vantaux.

12 - Installation selon la revendication 11, caractérisée en ce que le circuit de commande commun (**36**) assure le pilotage indépendant des moto-réducteurs lors de la transmission d'ordres de commandes spécifiques.

# FIG.1

# FIG.2A

# FIG.2B

# FIG. 2C

# FIG. 2D

# FIG. 2E

FIG.4

FIG.3

EP 0 484 258 A1

# FIG.5

# FIG.6

FIG.7

Office européen
des brevets

# RAPPORT DE RECHERCHE EUROPEENNE

Numero de la demande

EP    91 42 0387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 366 575 (JEANDEAUD, LE PAN PERDU) <br> * colonne 1, ligne 1 - ligne 50 * <br> * colonne 4, ligne 25 - ligne 53 * <br> * colonne 5, ligne 22 - ligne 28 * <br> * colonne 6, ligne 12 - ligne 30; revendications 1-4; figures 1-12 * <br> --- | 1-3,9-12 | E05F15/12 |
| A | DE-U-9 002 153 (KALUZA) <br> * page 4, ligne 25 - page 5, ligne 8 * <br> * page 5, ligne 19 - ligne 22 * <br> * page 6, ligne 1 - ligne 9; figures 2,4,5,7 * <br> --- | 1,2,4,5 | |
| A | DE-C-3 833 787 (ADRONIT-WERK HERMANN ADERHOLD) <br> * colonne 2, ligne 34 - ligne 38 * <br> * colonne 3, ligne 1 - ligne 4; figures 1,2 * <br> --- | 1,8 | |
| D,A | FR-A-2 490 712 (ANCELOTTI) <br><br> * page 3, ligne 13 - page 4, ligne 16 * <br> * page 5, ligne 8 - ligne 24; figures 1-7 * <br> --- | 1,2, 10-12 | |
| A | US-A-2 032 724 (T. SHARPE) <br> * page 2, colonne 1, ligne 51 - ligne 64; figures 9,10 * <br> --- | 1,2,5 | **DOMAINES TECHNIQUES RECHERCHES (Int. Cl.5)** <br><br> E05F <br> F16H |
| A | DE-A-3 615 200 (WURSTHORN) <br> * colonne 2, ligne 38 - ligne 49 * <br> * colonne 2, ligne 61 - colonne 3, ligne 1 * <br> * colonne 4, ligne 24 - ligne 33 * <br> * colonne 5, ligne 20 - ligne 27; figures 1-3 * <br> --- | 6 | |
| A | EP-A-0 149 338 (GENERAL MOTORS CORPORATION) <br> * page 2, ligne 21 - page 3, ligne 11 * <br> * page 5, ligne 8 - ligne 22 * <br> * page 11, ligne 20 - ligne 31; figures 3,4 * <br> --- | 7 | |
| A | DE-A-3 537 136 (R. BOSCH) <br> * colonne 2, ligne 41 - colonne 3, ligne 1; figure 1 * | 1,8 | |

Le présent rapport a été établi pour toutes les revendications

| Lieu de la recherche | Date d'achèvement de la recherche | Examinateur |
|---|---|---|
| LA HAYE | 24 JANVIER 1992 | GUILLAUME G.E.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)